# FASCICULE DE BREVET EUROPEEN

(11) **EP 2 651 252 B1**
(45) Date de publication et mention de la délivrance du brevet: **08.02.2017**
(21) Numéro de dépôt: 11817359.0
(22) Date de dépôt: 16.12.2011
(51) Int. Cl.: A23N 15/02, B26D 3/26

(54) **PROCÉDÉ ET DISPOSITIF DE CONDITIONNEMENT ET DE COUPE EN CONTINU DE BANANES**
VERFAHREN UND VORRICHTUNG ZUR BEHANDLUNG UND ZUM KONTINUIERLICHEN SCHNEIDEN VON BANANEN
METHOD AND DEVICE FOR TREATING AND CONTINUOUSLY CUTTING BANANAS

(30) Priorité: 17.12.2010 FR 1060721
(43) Date de publication de la demande: 23.10.2013
(73) Titulaire: Sileane, 42000 Saint-Etienne (FR)
(72) Inventeur: HENRY, Hervé, 42160 Andrezieux Boutheon (FR)
(74) Mandataire: Cabinet Laurent & Charras
(86) Numéro de dépôt international: PCT/FR2011/053014
(87) Numéro de publication internationale: WO 2012/080677

(56) Documents cités:
- EP-A1- 0 422 865
- WO-A1-2007/005685
- AU-B2- 503 788
- FR-A- 1 446 445
- US-A- 1 514 680
- US-A- 2 746 146

## Description

L'invention se rattache au secteur technique du conditionnement en continu de produits alimentaires et plus particulièrement des fruits récoltés sous forme de grappes ou de pattes.

L'invention trouve une application particulièrement avantageuse pour les régimes de bananes à partir desquels sont réalisées des pattes.

La récolte et le conditionnement des bananes, en vue de leur transport et de leur vente, est une chose particulièrement délicate. En effet, sur le bananier, les bananes se présentent sous forme d'un régime contenant plusieurs pattes de bananes. A titre indicatif, un régime peut contenir jusqu'à 300 bananes. Après avoir été récoltés, les différents régimes sont acheminés avec de grandes précautions sur le lieu de traitement, en vue notamment d'être conditionnés pour être vendus, soit directement, soit exportés.

Notamment, chaque régime est soumis à une opération de dépattage qui consiste à retirer les styles et stigmates, puis à détacher de la hampe, les différentes pattes qui constituent le régime. Les bananes, ou doigts, sont reliés par un coussinet à l'extrémité de leur tige ou pédoncule. La patte peut comprendre entre 30 et 40 bananes. Les pattes sont ensuite fractionnées en 2 ou 3, pour obtenir des bouquets comprenant entre 5 et 10 bananes par exemple. Ce sont ces bouquets qui vont être conditionnés, par exemple dans des caisses en vue de leur transport sur le lieu de vente. Par contre, sur le lieu de vente, après déballage, ce sont ces bouquets, constitués d'un nombre variable de bananes, qui sont vendus. Cette façon d'opérer, outre le fait qu'elle nécessite de nombreuses opérations manuelles et est délicate à réaliser, entraîne certains inconvénients.

Par exemple, après avoir réalisé les bouquets et avant leur conditionnement, si l'opérateur s'aperçoit que le bouquet présente une banane avec des défauts importants, c'est l'ensemble du bouquet qui est écarté de la chaîne de conditionnement et mis au rejet. Il peut bien évidemment en résulter des pertes importantes.

Un autre inconvénient se situe au niveau de la vente en tant que telle, étant donné, comme indiqué, que les bananes se présentent sous forme de bouquets avec un nombre aléatoire de bananes. Autrement dit, si le consommateur, souhaite acheter seulement une ou deux bananes, il doit détacher ces dernières du bouquet ce qui, d'une part, n'est pas très pratique et, d'autre part, peut détériorer les bananes en tant que telles. Par contre, cette possibilité n'est pas envisageable lorsque le bouquet est conditionné dans un sachet ou sous un film rétractable, par exemple.

Par ailleurs, suite à une directive européenne récente, il est désormais possible de vendre des fruits à l'unité. Cela ne pose aucun problème pour des fruits qui sont au départ récoltés individuellement. C'est le cas des pommes, poires, pêches, prunes, ... Or, par définition, comme indiqué, une banane n'est jamais récoltée à l'unité, ce qui matériellement et économiquement n'est pas envisageable.

Le document WO 2007/005685 divulgue un procédé de conditionnement et de coupe en continu de bananes selon lequel on prend une patte de bananes attachées par leur tige à coussinet, on place ladite patte sur un support et on coupe unilatéralement les bananes au-dessous de la patte.

L'invention s'est fixée pour but de remédier à ces inconvénients d'une manière simple, sûre, efficace et rationnelle.

Le problème que se propose de résoudre l'invention est de pouvoir vendre à l'unité des bananes, avec un autre objectif de pouvoir les trier de façon unitaire et en continu.

Pour résoudre ce problème et atteindre ces objectifs, il a fallu surmonter des difficultés importantes liées notamment au fait que les bananes sont attachées au niveau de leur tige ou pédoncule à un coussinet qui ne peut, en aucun cas, être totalement détaché desdites tiges.

Pour résoudre un tel problème, il a été conçu et mis au point un procédé conforme aux caractéristiques de la revendication 1.

Compte tenu de ces caractéristiques, suite aux différentes opérations, la banane unitaire obtenue demeure reliée à la partie correspondante du coussinet.

L'invention concerne également le dispositif pour la préparation des pattes de bananes en vue d'obtenir, en continu et d'une manière automatique, une banane unitaire, selon les caractéristiques de la revendication 2.

Avantageusement, pour résoudre le problème posé d'assurer et d'obtenir une suite d'opérations en continu, le dispositif comprend des moyens de positionnement et de transfert d'une couche de bananes vers le poste de coupe des bananes.

En considérant le fait qu'il est possible d'obtenir des bananes à l'unité, le dispositif comprend des moyens de contrôle de chaque banane découpée.

Selon l'invention, il est donc possible de contrôler unitairement chaque banane et, si nécessaire, de la calibrer pour ensuite trouver plusieurs lots constitués de bananes présentant sensiblement les mêmes caractéristiques de formes, de dimensions et d'aspect.

Selon une autre caractéristique, pour résoudre le problème posé d'obtenir, à partir d'un bouquet, au moins deux couches, les moyens aptes à écarter en deux parties le bouquet sont constitués par un organe support rectiligne profilé en section transversale pour écarter symétriquement les deux parties à partir du coussinet en vue de le soumettre à l'organe de coupe.

L'organe de coupe est une lame apte à être engagée dans une fente formée dans l'épaisseur du support et débordant au niveau du coussinet.

Il est important de souligner qu'à ce stade du traitement, les bananes ne se présentent plus sous forme de bouquets constituant par définition une forme volumétrique, mais sous forme de couches permettant de disposer les bananes sensiblement dans un même plan, ce qui s'avère important pour la suite des opérations.

Dans une forme de réalisation, la lame de coupe est assujettie à des moyens pour être déplacée angulairement à partir du dessous du support selon un mouvement de bas en haut.

Selon l'invention, après avoir obtenu et conditionné les bananes sous forme de couches, il convient de les séparer de la partie restante du coussinet en ayant toujours pour objectif qu'après séparation, chaque tige de banane demeure attachée à une partie du coussinet. Autrement dit, à ce niveau, la coupe doit être effectuée uniquement au niveau du coussinet et plus particulièrement de la partie du coussinet située entre deux tiges.

Pour résoudre un tel problème, le poste de coupe unitaire des bananes comprend :
- des moyens de bridage et de positionnement de la couche de bananes, de sorte que le coussinet soit dirigé vers le haut ;
- des moyens aptes à déterminer, dans l'espace, le positionnement du coussinet et des bananes attachées audit coussinet ;
- des moyens de coupe du coussinet entre les tiges de chaque banane.

Selon l'invention, d'une manière avantageuse, étant donné que l'on a obtenu des bananes unitaires, il est beaucoup plus facile de les contrôler et, éventuellement, de les calibrer.

Dans ce but, le poste de contrôle comprend des moyens aptes à estimer la longueur, la hauteur, le grade et la courbure de la banane considérée, la courbure étant considérée de l'apex jusqu'à l'extrémité de la tige ou pédoncule, la hauteur étant celle de la banane posée sur sa tranche.

Selon une autre caractéristique, en ayant pour objectif d'assurer une continuité entre les différentes opérations, depuis la prise de la patte de bananes jusqu'au conditionnement en tant que tel, le dispositif comprend, à la sortie du poste de coupe des bananes découpées, des moyens de distribution, unitaire ou part lots, desdites bananes en direction du poste de contrôle.

L'invention concerne également l'installation pour la mise en oeuvre du procédé et intégrant le dispositif tel que défini précédemment.

L'installation comprend :
- au moins un poste de transfert et de distribution des pattes de bananes ;
- au moins un poste intégrant les moyens pour obtenir des bouquets ;
- au moins un poste intégrant les moyens pour obtenir deux couches à partir du bouquet obtenu ;
- le poste de coupe unitaire des bananes ;
- un ensemble de lavage et de traitement fongique ;
- le poste de contrôle de chaque banane découpée ;
- des moyens de transfert des bananes découpées et contrôlées;
- des moyens de conditionnement des bananes.

L'invention est exposée ci-après plus en détail à l'aide des figures des dessins annexés dans lesquels :
- la figure 1 est une vue en perspective montrant un exemple d'une patte de bananes ;
- la figure 2 est une vue en perspective montrant deux demi-pattes ou bouquets de bananes obtenus à partir de la patte illustrée figure 1 ;
- la figure 3 montre les principales étapes du procédé à partir d'un bouquet tel qu'illustré figure 2 ;
- la figure 4 est une vue partielle en perspective d'une partie du dispositif au niveau des moyens de positionnement de la demi-patte ou bouquet de bananes en vue de la coupe au niveau du coussinet ;
- la figure 5 est une vue correspondant à la figure 4 montrant le principe de la coupe pour obtenir une couche ;
- la figure 6 est une vue en perspective d'un exemple d'un moyen de transfert d'une couche de bananes découpées selon l'invention ;
- la figure 7 est une vue en perspective d'une partie de l'installation montrant la coupe d'une demi-patte et le transfert des couches obtenues ;
- la figure 8 est une vue en perspective montrant le positionnement de la couche de bananes, avant d'être soumise à l'opération de coupe unitaire ;
- la figure 9 est une vue à caractère schématique montrant le principe du système de robotique visuelle pour la coupe unitaire ;
- la figure 10 est une vue partielle en perspective montrant les moyens de mise en oeuvre du dispositif de coupe unitaire des bananes ;
- la figure 11 montre le principe de mesure d'une banane découpée selon l'invention ;

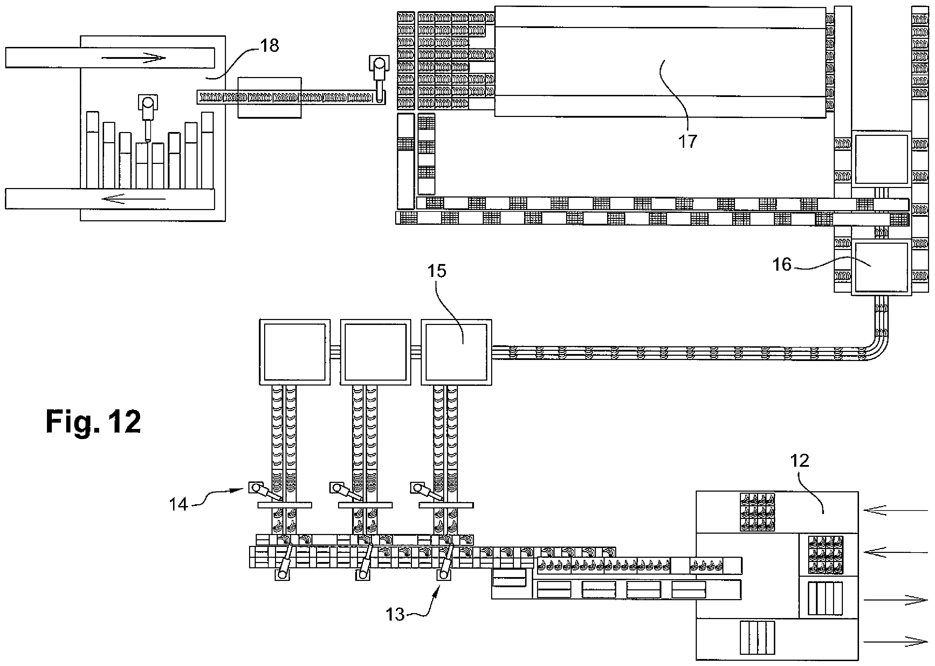

- la figure 12 est une vue en plan, à caractère schématique, d'un exemple d'une installation complète à partir de l'alimentation en grappe des bananes, jusqu'au conditionnement unitaire des bananes.

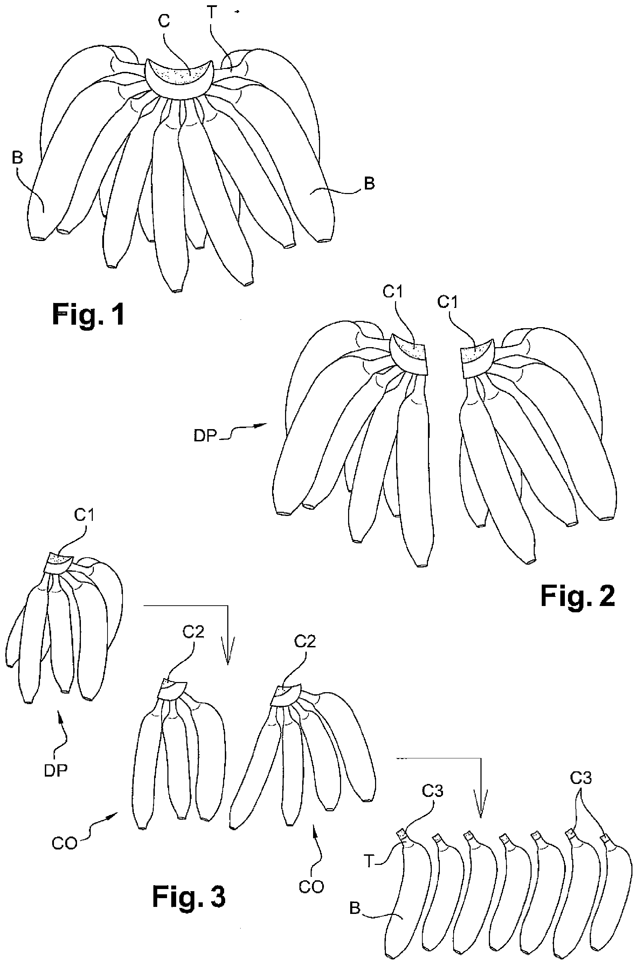

On a illustré, figure 1, un exemple de patte de bananes comprenant une pluralité de bananes (B) attachées par leur tige (T) à un coussinet (C).

La figure 2 montre deux demi-pattes de bananes désignées dans leur ensemble par (DP) et obtenues à partir de la patte illustrée figure 1. Là encore, on voit que les différentes bananes (B) de chaque demi-patte (DP) sont toujours attachées à une partie (C1) du coussinet.

Une première étape importante du procédé selon l'invention est d'obtenir à partir d'une demi-patte (DP), également connue sous le nom de bouquet, au moins deux couches (CO) de bananes. Par couche (CO), on entend au moins deux bananes attachées par leur tige (T) à la partie correspondante (C2) du coussinet. D'une manière importante, les bananes de chaque couche sont disposées sensiblement dans un même plan.

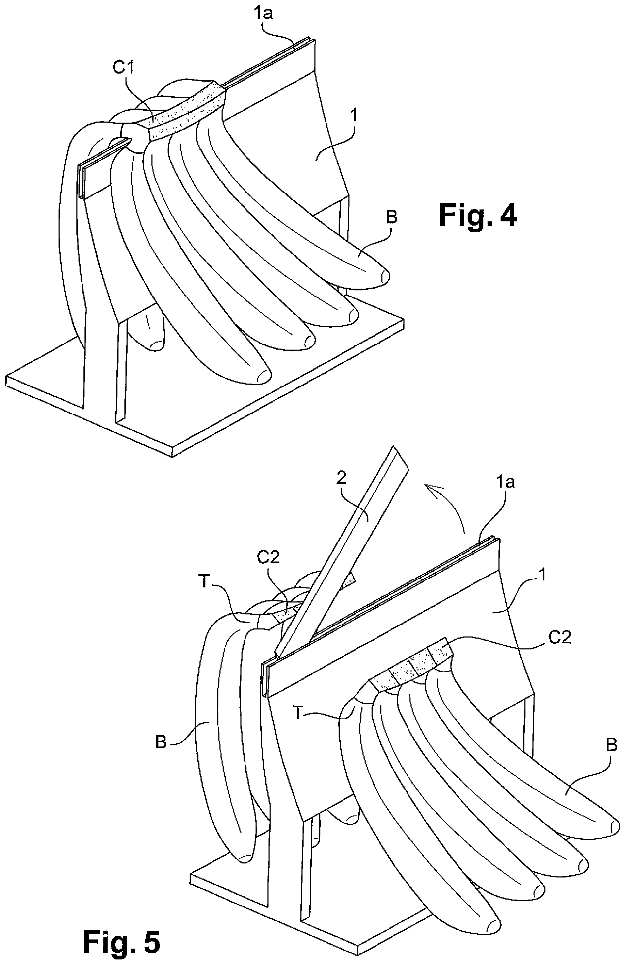

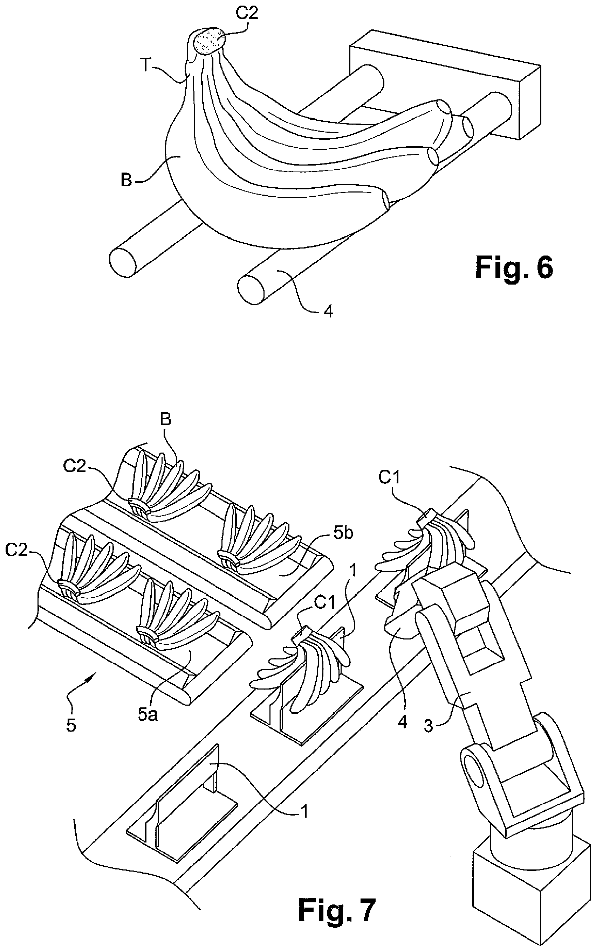

Pour réaliser cette opération et comme le montrent les figures 4 à 7, le bouquet (DP) est positionné sur un moyen (1) pour être écarté en deux parties, chacune des parties étant destinée à constituer la couche (CO) comme indiqué. Ce moyen (1) est constitué par un organe support rectiligne profilé en section pour écarter symétriquement les deux parties à partir du coussinet (C1) en vue de les soumettre à un organe de coupe. Dans ce but, l'organe de coupe est une lame (2) engagée dans une fente (1a) formée dans l'épaisseur du support (1) et débouchant au niveau du coussinet (C1). Par exemple, la lame de coupe (2) est assujettie à des moyens pour être déplacée angulairement à partir du dessous du support (1), par exemple, selon un mouvement circulaire de bas en haut.

Il résulte de ces dispositions que la coupe s'effectue au niveau du coussinet (C1) de sorte que chaque couche (CO) obtenue présente une partie de coussinet (C2) où sont attachées les différentes tiges (T) des bananes (B).

La coupe étant effectuée, chaque couche (CO) doit être récupérée et déposée sur un convoyeur ou autre, pour être dirigée en direction d'un poste de découpe unitaire. Par exemple, un robot (3) positionne une pelle (4), afin de soutenir les bananes de l'une des couches, sans blesser les fruits. La coupe étant effectuée, l'autre couche est maintenue en équilibre par un poussoir (vérin) d'orientation du coussinet. Dans un mouvement de bascule, un préhenseur recueille la couche et la positionne sur un convoyeur (5). Le robot (3) glisse ensuite la pelle (4) sous d'autres couches avec pour objectif de soulager l'ensemble de la couche. Cette dernière peut ensuite être saisie manuellement ou par un autre robot pour être déposée sur le convoyeur (5) qui peut être en deux parties (5a) et (5b) correspondant, chacune, à l'une des couches.

Chaque couche ainsi obtenue est par conséquent dirigée par les convoyeurs (5a) et (5b) au niveau d'un poste de découpe unitaire des bananes.

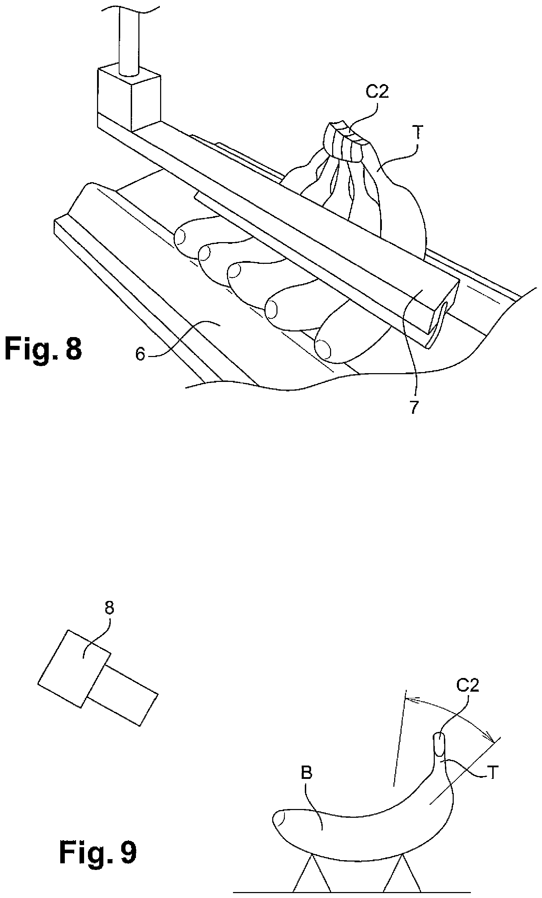

Comme le montre la figure 8, ce poste comprend des moyens de bridage et de positionnement de la couche de banane, de sorte que le coussinet (C2) soit dirigé vers le haut. Par exemple, la couche (CO) de bananes est disposée dans un berceau (6) en y étant maintenue par un organe d'appui (7) assujetti à tout moyen de commande connu et approprié, le but recherché étant de parfaitement maintenir en position la couche de bananes, notamment lors de l'opération de coupe en tant que telle. Le poste de coupe présente également des moyens aptes à déterminer, dans l'espace, le positionnement du coussinet (C2), et des bananes attachés audit coussinet. Ces moyens sont avantageusement constitués par un système de vision 3D (8) (figure 9).

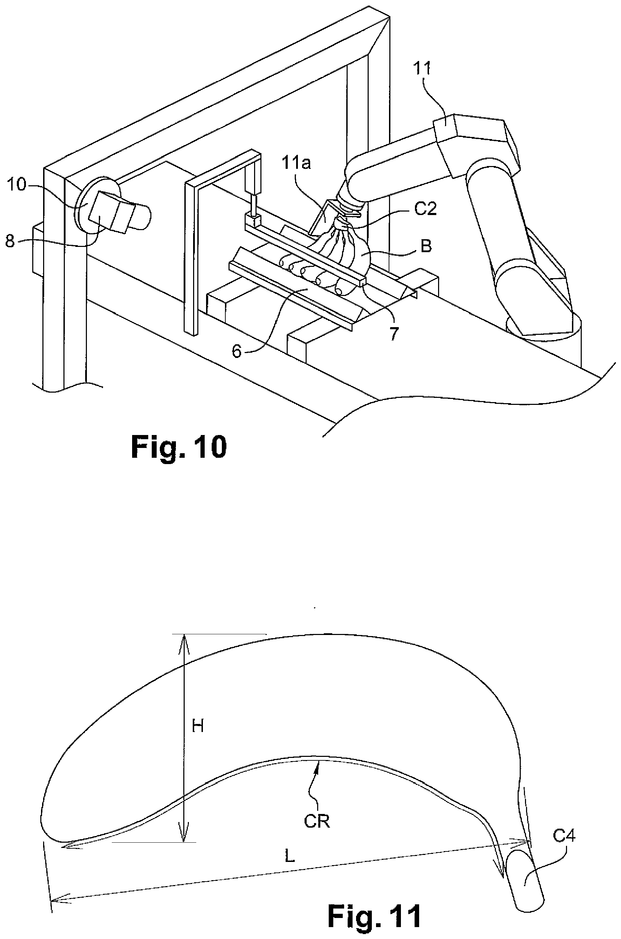

Comme le montre la figure 10, ce système de vision (8) est assujetti à des moyens motorisés (10) pour être déplacé selon différents plans de l'espace, afin d'assurer un balayage de la zone où est située la couche de bananes. Plus particulièrement, on scanne la zone du coussinet (C2) où sont attachées les tiges (T) des bananes (B), afin d'obtenir une image en trois dimensions de cette zone. Un algorithme de vision 3D spécifique permet de détecter les tiges, de déterminer l'axe médian de chaque tige et de calculer la bissectrice entre chaque tige, laquelle bissectrice correspond à l'axe de coupe, comme il sera indiqué dans la suite de la description.

Par la transformation des valeurs calculées, les coordonnées sont envoyées à un robot (11) équipé d'une tête de coupe (11a) via une liaison Ethernet par exemple. Le robot (11) effectue donc des trajectoires de coupe pour séparer les bananes, la coupe s'effectuant, comme indiqué, au niveau du pédoncule, seulement entre chacune des tiges.

Par conséquent, on obtient des bananes découpées à l'unité et dont chacune des tiges demeure attachée à une partie (C3) du pédoncule (figure 11).

Les bananes ainsi découpées peuvent être soumises à un poste de contrôle qui comprend des moyens aptes à estimer la longueur (L), la hauteur (H), le grade et la courbure (CR) de la banane considérée (figure 10). La courbure est considérée de l'apex jusqu'à l'extrémité de la tige, tandis que la hauteur (H) correspond à celle de la banane posée sur sa tranche (figure 10).

Pour ces mesures, il est nécessaire de connaître la position des tiges et du coussinet, lesquelles sont repérées grâce à la variation de la largeur de la banane. Par exemple, des caméras peuvent être disposées de chaque côté de la courbure de la banane.

Bien évidemment, le dispositif tel que décrit peut faire partie d'une installation complète de traitement depuis la réception des grappes de bananes jusqu'au conditionnement des bananes découpées. Comme le montre la figure 11, cette installation comprend essentiellement :
- un poste (12) de transfert et de distribution des pattes de bananes ;
- un poste (13) intégrant les moyens pour obtenir des bouquets ;
- au moins un poste (14) intégrant les moyens pour obtenir au moins deux couches à partir d'un bouquet ;
- au moins un poste (15) de découpe unitaire des bananes ;
- un ensemble (17) de lavage et de traitement fongique ;
- au moins un poste (16) de contrôle de chaque banane découpée ;
- des moyens de transfert des bananes découpées et contrôlées,
- des moyens (18) de conditionnement des bananes.

Bien évidemment, sans pour cela sortir du cadre de l'invention, l'installation peut être avantageusement complétée par des moyens parfaitement connus par l'homme du métier, aptes à contrôler le poids des bananes, ainsi que des moyens pour mesurer leur maturité.

Les avantages ressortent bien de la description.

## Revendications

1. Procédé de conditionnement et de coupe en continu de bananes, selon lequel :
- on prend une patte de bananes attachées par leur tige (T) à un coussinet (C),
- on découpe à partir du coussinet (C), la patte de bananes pour obtenir au moins deux demi-pattes ou bouquets (DP) reliés à une partie (C1) du coussinet ;
- on sépare, à partir de la partie de coussinet (C1) préalablement découpé, chaque demi-patte en couches (CO) d'au moins deux bananes dont les tiges (T) demeurent attachées à une partie (C2) du coussinet ;
- on coupe unitairement les bananes de chaque couche (CO) pour obtenir une banane (B) dont la tige (T) demeure attachée à une partie (C3) du coussinet ;
- on contrôle la banane unitairement.

2. Dispositif de conditionnement et de coupe en continu de bananes, **caractérisé en ce qu'**il comprend :
- des moyens aptes à découper une patte de bananes, à partir d'un coussinet (C), pour obtenir deux demi-pattes (DP) ;
- des moyens aptes à écarter, en deux parties, la demi-patte (DP) pour la soumettre, au niveau d'un coussinet (C1), à un organe de coupe (2) pour obtenir deux couches (CO) composées chacune d'au moins deux bananes ;
- au moins un poste de coupe des bananes de chaque couche (CO) entre leur tige (T) ou pédoncule attaché à un coussinet (C2), pour séparer les bananes.

3. Dispositif selon la revendication 2, **caractérisé en ce qu'**il comprend des moyens de positionnement et de transfert d'une couche de bananes vers le poste de coupe des bananes.

4. Dispositif selon la revendication 2, **caractérisé en ce qu'**il comprend des moyens de contrôle de chaque banane découpée.

5. Dispositif selon la revendication 2, **caractérisé en ce que** les moyens aptes à écarter en deux parties la demi-patte (DP), sont constitués par un organe support rectiligne (1) profilé en section transversale pour écarter symétriquement les deux parties à partir du coussinet en vue de le soumettre à l'organe de coupe (2).

6. Dispositif selon la revendication 5, **caractérisé en ce que** l'organe de coupe (2) est une lame apte à être engagée dans une fente (1a) formée dans l'épaisseur du support (1) et débordant au niveau du coussinet.

7. Dispositif selon l'une des revendications 3 à 6, **caractérisé en ce que** la lame de coupe (2) est assujettie à des moyens pour être déplacée angulairement à partir du dessous du support (1), de bas en haut.

8. Dispositif selon la revendication 2, **caractérisé en ce que** le poste de coupe unitaire des bananes comprend :
- des moyens de bridage et de positionnement (6) et (7) de la couche (CO) de bananes, de sorte que le coussinet soit dirigé vers le haut ;
- des moyens aptes à déterminer, dans l'espace, le positionnement du coussinet et des bananes attachées audit coussinet ;
- des moyens de coupe (11a) du coussinet entre les tiges de chaque banane.

9. Dispositif selon la revendication 2, **caractérisé en ce qu'**il comprend, à la sortie du poste de coupe des bananes découpées, des moyens de distribution, unitaire ou part lots, desdites bananes en direction du poste de contrôle.

10. Dispositif selon la revendication 2, **caractérisé en ce que** le poste de contrôle comprend des moyens aptes à estimer la longueur, la hauteur, le grade et la courbure de la banane considérée, la courbure étant considérée de l'apex jusqu'à l'extrémité de la tige ou pédoncule, la hauteur étant celle de la banane posée sur sa tranche.

11. Installation pour la mise en oeuvre du procédé selon la revendication 1 et intégrant le dispositif selon l'une quelconque des revendications 2 à 10, **caractérisée en ce qu'**elle comprend :
- au moins un poste de transfert et de distribution (12) des pattes de bananes ;
- au moins un poste (13) intégrant les moyens pour obtenir des bouquets ;
- au moins un poste (14) intégrant les moyens pour obtenir au moins deux couches à partir du bouquet obtenu ;
- le poste (15) de coupe unitaire des bananes ;
- le poste (16) de contrôle de chaque banane découpée ;
- un ensemble (17) de lavage et de traitement fongique ;
- des moyens de transfert des bananes découpées et contrôlées ;
- des moyens. (18) de conditionnement des bananes.

## Patentansprüche

1. Verfahren zum Verpacken und kontinuierlichen Zerteilen von Bananen, wobei:
- eine Bananenhand genommen wird, deren Bananen über ihren Stiel (T) an einem Strunk (C) anhaften,
- ausgehend vom Strunk (C), die Bananenhand zerteilt wird, um mindestens zwei Handhälften oder Bouquets (DP) zu erhalten, die über einen Teil (C1) des Strunks miteinander verbunden sind;
- ausgehend von dem zuvor zerteilten Teil des Strunks (C1), jede Handhälfte in Lagen (CO) von mindestens zwei Bananen geteilt wird, deren Stiele (T) weiterhin an einem Teil (C2) des Strunks anhaften;
- die Bananen jeder Lage (CO) einzeln zerteilt werden, um eine Banane (B) zu erhalten, deren Stiel (T) weiterhin an einem Teil (C3) des Strunks anhaftet und;
- jede Banane einzeln kontrolliert wird.

2. Verfahren zum Verpacken und kontinuierlichen Zerteilen von Bananen, **dadurch gekennzeichnet, dass** das Verfahren folgendes umfasst:
- Mittel zum Zerteilen einer Bananenhand, ausgehend von einem Strunk (C), um zwei Handhälften (DP) zu erhalten;
- Mittel zum Aufspreizen der Handhälfte (DP) in zwei Teile, um die Handhälfte auf Höhe eines Strunks (C1) einem Schneidorgan (2) vorzulegen, um zwei Lagen (CO) zu erhalten, die jeweils aus mindestens zwei Bananen bestehen;
- mindestens eine Schneidstation zum Zerteilen und Trennen der Bananen jeder einzelnen Lage (CO) zwischen ihren an einem Strunk (C2) anhaftenden Stielen (T) bzw. Stielansätzen.

3. Vorrichtung nach Anspruch 2, **dadurch gekennzeichnet, dass** die Vorrichtung Mittel zur Positionierung und Übertragung einer Lage Bananen an eine Bananen-Schneidstation umfasst.

4. Vorrichtung nach Anspruch 2, **dadurch gekennzeichnet, dass** die Vorrichtung Mittel zur Kontrolle jeder einzelnen abgeteilten Banane umfasst.

5. Vorrichtung nach Anspruch 2, **dadurch gekennzeichnet, dass** die Mittel zum Aufspreizen der Handhälfte (DP) in zwei Teile aus einem geradlinig verlaufenden, im Querschnitt profilierten Halter (1) bestehen, um im Hinblick auf die Vorlage an die Schneidstation (2), die beiden Teile ausgehend vom Strunk symmetrisch aufzuspreizen.

6. Vorrichtung nach Anspruch 5, **dadurch gekennzeichnet, dass** es sich bei dem Schneidorgan (2) um ein Messer handelt, das in einen, in der Dicke des Halters (1) ausgebildeten Spalt (1a) eingelassen werden kann und über den Strunk ragt.

7. Vorrichtung nach einem der Ansprüche 3 bis 6, **dadurch gekennzeichnet, dass** das Schneidmesser (2) an Mittel gebunden ist, um ausgehend von der Unterseite des Halters (1), Schwenkbewegungen von unten nach oben auszuführen.

8. Vorrichtung nach Anspruch 2, **dadurch gekennzeichnet, dass** die Schneidstation in einzelne Bananen folgendes umfasst:
- Mittel zum Spannen und Positionieren (6) und (7) der Lage (CO) Bananen, sodass der Strunk nach oben zeigt;
- Mittel zur räumlichen Bestimmung der Positionierung des Strunks und der an diesem Strunk anhaftenden Bananen;
- Mittel zum Zerteilen (11a) des Strunks zwischen den einzelnen Bananenstielen.

9. Vorrichtung nach Anspruch 2, **dadurch gekennzeichnet, dass** die Vorrichtung im Anschluss an die Schneidstation zum Zerteilen der Bananen Mittel zur Weitergabe der Bananen, einzeln oder zu mehreren, an die Kontrollstation umfasst.

10. Vorrichtung nach Anspruch 2, **dadurch gekennzeichnet, dass** die Kontrollstation Mittel zur Abschätzung der Länge, der Höhe, des Grades und der Krümmung der jeweiligen Banane umfasst, wobei die Krümmung von der Spitze bis zum Stielende bzw. zum Ende des Stielansatzes reicht und mit Höhe die Höhe der längs aufliegenden Banane gemeint ist.

11. Anlage zur Umsetzung des Verfahrens nach Anspruch 1, unter Einbindung der Vorrichtung nach einem der Einsprüche 2 bis 10, **dadurch gekennzeichnet, dass** die Anlage folgendes umfasst:
- mindestens eine Station zur Übertragung und Weitergabe (12) der Bananenhände;
- mindestens eine Station (13) mit Mitteln zum Erhalt von Bouquets;
- mindestens eine Station (14) mit Mitteln zum Erhalt von mindestens zwei Lagen, ausgehend von den erhaltenen Bouquets;
- die Schneidstation (15) zum Zerteilen in einzelne Bananen;
- die Kontrollstation (16) zur Kontrolle jeder einzelnen Banane;
- eine Anordnung (17) zum Waschen und zur Behandlung von Pilzbefall;
- Mittel zur Übertragung der zerteilten und kontrollierten Bananen;
- Mittel (18) zur Verpackung der Bananen.

## Claims

1. A method of continuously cutting and packaging bananas, said method consisting in :
- taking a hand of bananas attached by their stalks (T) to a crown (C);
- cutting up the hand of bananas starting from the crown (C) so as to obtain at least two half-hands or bunches (DP), each connected to a respective portion (C1) of the crown ;
- starting from the previously cut crown (C1), separating each half-hand into layers (CO) of at least two bananas having their stalks (T) still attached to respective portions (C2) of the crown ;
- cutting the bananas off individually from each layer (CO) so as to obtain a banana (B) having its stalk (T) still attached to a portion (C3) of the crown; and
- checking each banana individually.

2. Apparatus for continuously cutting and packaging bananas, **characterized in that** it comprises :
- means suitable for cutting up a hand of bananas, starting from a crown (C), so as to obtain two half-hands (DP) ;
- means suitable for splaying the half-hand (DP) apart into two portions, so as to subject it, at a crown (C1), to a cutting member (2) in order to obtain two layers (CO), each made up of at least two bananas; and
- at least one cutting-off station for cutting off the bananas in each layer (CO) between their stalks (T) or peduncles attached to a crown (C2), so as to separate the bananas.

3. Apparatus according to claim 2, **characterized in that** it comprises positioning and transferring means of a layer of bananas to a cutting-off station for cutting off the bananas.

4. Apparatus according to claim 2, **characterized in that** it comprises means for checking each cut-off banana.

5. Apparatus according to claim 2, **characterized in that** the means suitable for splaying the half-hand (DP) into two portions are constituted by a rectilinear support member (1) that has a cross-section shaped to splay the two portions apart symmetrically starting from the crown with a view to subjecting said crown to the cutting member (2).

6. Apparatus according to claim 5, **characterized in that** the cutting member (2) is a blade suitable for being engaged in a slot (1a) formed in the thickness of the support (1) and projecting therefrom at the level of the crown.

7. Apparatus according to any one of claims 3 to 6, **characterized in that** the cutting blade (2) is coupled to means for being moved angularly from the bottom of the support (1), upwards.

8. Apparatus according to claim 2, **characterized in that** the cutting-off station for cutting off the bananas individually comprises :
- positioning and clamping means (6) and (7) of the layer (CO) of bananas, so that the crown is directed upwards;
- means suitable for determining, in three-dimensional space, the positioning of the crown and of the bananas attached to said crown; and
- cutting means (11a) of the crown between the stalks of all of the bananas.

9. Apparatus according to claim 2, **characterized in that**, at the outlet of the cutting-off station, it comprises means for distributing the cut-off bananas individually or in batches to the checking station.

10. Apparatus according to claim 2, **characterized in that** the checking station comprises means suitable for estimating the length, height, grade, and curvature of the banana in question, the curvature being considered from the tip to the end of the stalk or peduncle, and the height being the height of the banana as laid on its side.

11. An installation for implementing the method according to claim 1, and incorporating the apparatus according to any one of claims 2 to 10, **characterized in that** it comprises :
- at least one transfer and distribution station (12) of the hands of bananas ;
- at least one station (13) incorporating the means for obtaining half-hands ;
- at least one station (14) incorporating the means for obtaining at least two layers from the half-hand obtained ;
- the cutting-off station (15) for individually cutting off the bananas;
- the checking station (16) for checking each cut-off banana ;
- a washing and antifungal treatment assembly (17) ;
- transfer means for transferring the cut-off and checked bananas; and
- packaging means (18) of the bananas.
